# FASCICULE DE BREVET EUROPEEN

(11) **EP 1 289 394 B1**
(45) Date de publication et mention de la délivrance du brevet: **05.05.2010**
(21) Numéro de dépôt: 01940648.7
(22) Date de dépôt: 31.05.2001
(51) Int. Cl.: A47J 27/08

(54) **DISPOSITIF DE VERROUILLAGE/DEVERROUILLAGE D'UN COUVERCLE SUR UNE CUVE, ET RECIPIENT DE CUISSON SOUS PRESSION**
VERRIEGELUNGSVORRICHTUNG UND ENTRIEGELUNGSVORRICHTUNG EINES DECKELS AUF EINEM TOPF, UND DAMPFDRUCKKOCHTOPF
DEVICE FOR LOCKING/UNLOCKING A LID ON A BOWL AND PRESSURE COOKER COMPRISING SAME

(30) Priorité: 31.05.2000 FR 0007282
(43) Date de publication de la demande: 12.03.2003
(73) Titulaire: SEB S.A., 69132 Ecully Cedex (FR)
(72) Inventeur: CHAMEROY, Eric, F-21260 Veronnes (FR); RHETAT, Eric, Christian, Jacques, F-21000 Dijon (FR)
(74) Mandataire: Martin, Didier Roland Valéry
(86) Numéro de dépôt international: PCT/FR2001/001687
(87) Numéro de publication internationale: WO 2001/091619

(56) Documents cités:
- EP-A- 1 029 483
- US-A- 1 907 528
- US-A- 4 627 417

## Description

### DOMAINE TECHNIQUE

La présente invention se rapporte au domaine technique général des dispositifs de verrouillage / déverrouillage d'un couvercle sur une cuve, pour former un récipient de cuisson sous pression, ainsi qu'aux récipients de cuisson sous pression.

La présente invention concerne plus particulièrement les dispositifs de verrouillage / déverrouillage qui comprennent :
- des mâchoires montées mobiles radialement sur le couvercle par des bras entraîneurs entre une position de verrouillage du couvercle sur la cuve et une position de déverrouillage dans laquelle le couvercle peut être retiré de la cuve,
- des moyens de commande du mouvement des mâchoires reliés aux bras de façon à provoquer leur déplacement radial et à déplacer les mâchoires dans l'une ou l'autre de leurs positions de verrouillage et de déverrouillage,
- au moins une soupape de verrouillage montée sur le couvercle et apte à occuper, sous l'effet de la pression régnant dans le récipient, une position haute et une position basse, de manière à bloquer sélectivement le mouvement des mâchoires.

### TECHNIQUE ANTERIEURE

Les dispositifs de verrouillage / déverrouillage habituellement rencontrés comprennent deux mâchoires reliées à deux bras entraîneurs dont le mouvement est commandé par des éléments en translation.

Même si de tels dispositifs donnent généralement entière satisfaction, il s'avère nécessaire de rechercher des solutions particulièrement bien équilibrées sur le plan mécanique et susceptibles de répartir les efforts sur une partie plus importante du périmètre du couvercle. On recherche par ailleurs des solutions techniques particulièrement économiques, c'est-à-dire réduisant la part de matériau métallique, tout en étant sûres.

Il est connu du document US-4 627 417 un dispositif de verrouillage / déverrouillage d'un couvercle sur une cuve pour former un récipient de cuisson sous pression, dispositif qui présente les caractéristiques énoncées dans le préambule de la revendication 1.

Il est également connu du document US-1 907 528 un dispositif de verrouillage / déverrouillage d'un couvercle sur une cuve, tel qu'un tonneau ou un bidon. Le dispositif de verrouillage / déverrouillage du couvercle comprend des mâchoires montées mobiles radialement sur le couvercle ainsi que des moyens de commande du mouvement des mâchoires comprenant un organe de commande apte à être déplacé pour déplacer les mâchoires dans l'une ou l'autre de leur position de verrouillage ou de déverrouillage.

### EXPOSE DE L'INVENTION

Un objet de la présente invention vise en conséquence à fournir un nouveau dispositif de verrouillage / déverrouillage qui permette une plus grande répartition des efforts sur le périmètre du couvercle lors du serrage des mâchoires.

Un autre objet de la présente invention est de faciliter la manipulation des moyens de commande par l'utilisateur.

Encore un autre objet de la présente invention est de fournir un dispositif qui limite les efforts exercés par l'utilisateur sur le couvercle.

Un autre objet de l'invention consiste à diminuer les jeux lors du blocage du mouvement des mâchoires pour des raisons de sécurité.

Les objets assignés à l'invention sont atteints à l'aide d'un dispositif de verrouillage / déverrouillage d'un couvercle sur une cuve pour former un récipient de cuisson sous pression comprenant les caracteristiques de la revendication 1

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre d'exemples illustratifs et non limitatifs dans lesquels :
- La figure 1 montre, selon une vue générale, un récipient de cuisson, de préférence sous pression pourvu, du dispositif de verrouillage / déverrouillage conforme à la présente invention.
- Les figures 2 et 3 représentent, selon une vue en perspective, le dispositif de verrouillage / déverrouillage selon un premier mode de réalisation de la présente invention, les mâchoires étant respectivement en position ouverte et en position fermée.
- Les figures 4 et 5 sont des vues similaires aux figures 2 et 3 et représentent le dispositif de verrouillage / déverrouillage selon un deuxième mode de réalisation de la présente invention.

### MEILLEURE MANIERE DE REALISER L'INVENTION

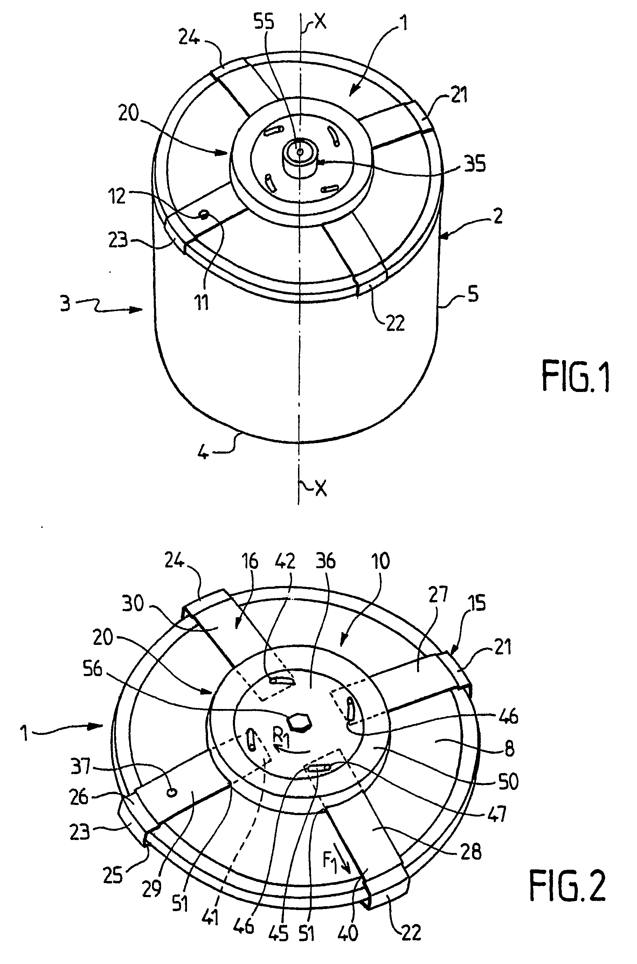

Le dispositif de verrouillage / déverrouillage conforme à l'invention est destiné à assurer la fermeture par verrouillage d'un couvercle 1 sur une cuve 2 (figure 1), de manière à former un récipient de cuisson 3, de préférence sous pression tel qu'un autocuiseur.

Le récipient 3 est par exemple constitué d'une cuve 2 de forme sensiblement cylindrique, d'axe de révolution X-X, sur laquelle le couvercle 1 est destiné à être rapporté de manière étanche, par exemple par l'intermédiaire d'un joint d'étanchéité à lèvres (non représenté) couramment rencontré dans l'état de la technique.

La cuve 2 est de manière classique réalisée à partir d'un matériau métallique tel que de l'inox, et pourvue d'un fond thermo-conducteur 4 solidaire de la cuve, par exemple par frappe à chaud. La cuve 2 comporte également des organes de préhension non représentés tels que des poignées fixées sur les parois 5 de la cuve.

Le couvercle 1 comporte, de manière connue en soi, un disque de fermeture profilé 8 pourvu à sa périphérie d'une zone en forme de gorge servant de siège de réception du joint d'étanchéité à lèvres, et assurant avec ce dernier l'étanchéité de la fermeture du couvercle 1 sur la cuve 2.

Le disque de fermeture 8 est en outre pourvu d'au moins un perçage 11. Ce perçage permet le montage et le passage d'une soupape de verrouillage 12 montée à coulissement libre axial dans ledit perçage, entre une position basse de butée et une position haute de butée.

Une telle soupape de verrouillage 12 est, comme cela est bien connu dans l'art antérieur, constituée d'un doigt de sécurité dont la fonction principale est de fournir une information visuelle de la pression régnant dans le récipient sous pression.

De manière avantageuse, l'étanchéité à la vapeur entre la soupape de verrouillage 12 et le perçage 11 est améliorée par interposition d'un joint porté par la partie inférieure de la soupape de verrouillage 12.

Par conséquent, lorsque le récipient 3 est fermé de manière étanche en verrouillant le couvercle 1 sur la cuve 2, et lorsque la cuve est placée sur une source de chaleur, la pression à l'intérieur du récipient peut augmenter, provoquant ainsi le passage de la soupape de verrouillage 12 dans sa position haute. Au contraire, lorsque la pression diminue et tend vers zéro à l'intérieur du récipient, la soupape de verrouillage 12 se déplace vers le bas pour atteindre sa position basse de butée.

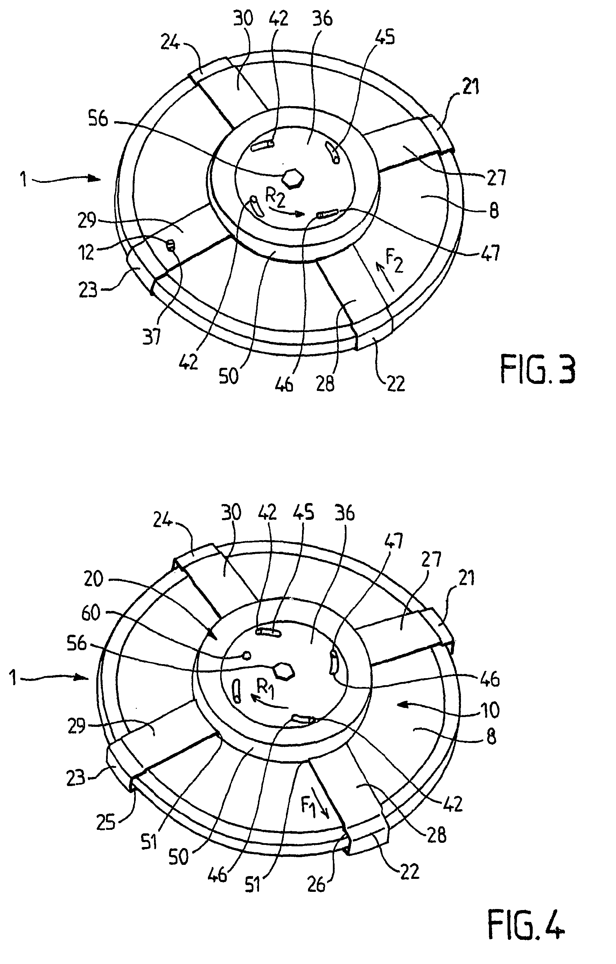

Afin de verrouiller / déverrouiller le couvercle 1 sur la cuve 2, le dispositif de verrouillage / déverrouillage 10 comprend :
- des mâchoires 15 qui sont montées mobiles radialement sur le couvercle 1 par des bras entraîneurs 16, entre une position de verrouillage du couvercle 1 sur la cuve 2 telle que celle représentée aux figures 1 et 3, et une position de déverrouillage dans laquelle le couvercle 1 peut être retiré de la cuve 2, comme cela est représenté à la figure 2.
- des moyens de commande 20 du mouvement des mâchoires 15 qui sont reliés aux bras entraîneurs 16 afin de provoquer le déplacement radial de ces bras et à déplacer les mâchoires 15 dans l'une ou l'autre de leurs positions de verrouillage et de déverrouillage.

Selon la présente invention, le dispositif de verrouillage 10 comprend en outre la soupape de verrouillage 12 qui est apte à occuper sous l'effet de la pression régnant dans le récipient 3, la position haute ou la position basse, de manière à bloquer sélectivement le mouvement des mâchoires 15.

Selon une caractéristique de l'invention, le dispositif de verrouillage / déverrouillage 10 comprend au moins deux, et de préférence quatre mâchoires 21 à 24. Ces mâchoires sont par exemple également réparties à la périphérie du couvercle 1, formant ainsi entre elles un angle voisin de 90°. En variante, les quatre mâchoires peuvent former deux paires de mâchoires formant entre elles un angle aigu.

Les mâchoires 21 à 24 se présentent de manière classique sous la forme de segments de profil en U adaptés à la forme du récipient et dans le cas présent, sous la forme d'arcs de cercles de longueur déterminée. Chacune des mâchoires 21 à 24 comporte un rebord inférieur 25 et un rebord supérieur 26 permettant d'enserrer le bord périphérique du couvercle 1 et la limite supérieure d'une gorge de l'extrémité supérieure de la cuve 2.

Chaque mâchoire 21 à 24 est montée mobile sur le disque de fermeture 8 par l'intermédiaire d'un bras entraîneur. Dans le cas présent, le dispositif possède donc quatre bras 27 à 30 qui s'étendent depuis la périphérie du couvercle 1 où sont disposées les mâchoires 21 à 24 et convergent radialement en direction du centre du couvercle 1.

Selon une caractéristique importante de l'invention, les moyens de commande 20 du mouvement des mâchoires comprennent :
- un organe de commande 35 qui est apte à être déplacé pour commander le mouvement des mâchoires 21 à 24,
- une plaque intermédiaire 36 qui est entraînée en rotation par l'organe de commande 35 et qui coopère avec les bras entraîneurs 27 à 30 pour que la rotation de la plaque 36 provoque le déplacement radial des bras entraîneurs 27 à 30.

De préférence, l'organe de commande 35 est monté mobile en rotation par rapport au couvercle 1.

Selon une variante de réalisation, au moins une lumière 37 est, dans le premier mode de réalisation, ménagée dans au moins l'un des quatre bras radiaux 27 à 30, la soupape de verrouillage 12 et la lumière 37 étant agencées relativement pour qu'en position de verrouillage des quatre mâchoires 21 à 24 telle que représentée à la figure 3, la lumière 37 soit traversée par la soupape 12, cette soupape est alors en position haute sous l'effet de la pression, pour bloquer les mâchoires en position de verrouillage du couvercle 1 sur la cuve 2.

L'organe de commande 35 commande le déplacement des bras entraîneurs 27 à 30 de manière active dans le sens radial externe F₁ (figure 2), c'est à dire dans le sens du déverrouillage des mâchoires 21 à 24, et dans le sens radial interne F₂ (figure 3), c'est à dire dans le sens du verrouillage des mâchoires 21 à 24.

Selon la présente l'invention représentée aux figures, chacun des bras entraîneurs 27 à 30 se présente sous la forme d'un profilé métallique rectiligne sensiblement plat, et dont le profil est adapté à celui du disque de fermeture 8. Chacun des bras possède ainsi une extrémité externe 40 qui est reliée à l'une des mâchoires 21 à 24 et une extrémité interne 41 qui coopère avec la plaque intermédiaire 36.

Selon la présente invention, chacune des extrémités internes 41 des bras 27 à 30 est munie d'un doigt 42, et la plaque intermédiaire 36 comporte quatre chemins de guidage 45 dans lesquels les doigts 42 pénètrent et se déplacent lors de la rotation de la plaque 36.

Les doigts 42 sont par exemple constitués d'ergots qui font saillie perpendiculairement au plan des bras 27 à 30 et qui s'étendent en direction opposée à la cuve 2.

Les chemins de guidage 45 sont chacun constitués d'une lumière qui s'étend entre deux extrémités 46 et 47. Cette lumière traverse toute l'épaisseur de la plaque intermédiaire 36 et est de forme courbe, dont le centre de courbure est légèrement décalé par rapport au centre de la plaque 36 de sorte que l'une des extrémités, par exemple l'extrémité 46 est décalée vers le centre (vers l'intérieur) de la plaque 36 par rapport à l'autre des extrémités, l'extrémité 47. Dans le cas présent, la plaque intermédiaire 36 possède un centre de rotation situé sur l'axe X-X du récipient 3.

En outre, la plaque intermédiaire 36 prend la forme d'un disque plat dont le plan est sensiblement perpendiculaire à l'axe X-X et dont le centre est situé sur l'axe X-X.

Le mouvement sensiblement rectiligne radial des bras 27 à 30 est guidé par un anneau de guidage 50, qui possède en section transversale une forme en L de manière à être placé autour de la plaque intermédiaire 36. En outre, l'anneau de guidage 50 possède quatre évidements 51 régulièrement répartis autour de l'anneau et à l'intérieur desquels se déplacent les quatre bras entraîneurs 27 à 30.

Le mouvement radial interne ou radial externe des bras 27 à 30 est ainsi guidé par l'anneau 50, de sorte que lorsque la plaque intermédiaire 36 est entraînée en rotation par un utilisateur dans le sens horaire (R₁) ou le sens anti-horaire (R₂), la forme courbe (orientée vers l'intérieur de la plaque) des chemins 45 provoque un déplacement sensiblement rectiligne des doigts 42, qui sont eux-mêmes solidaires des extrémités internes 41 des bras. Ces bras sont ainsi entraînés en déplacement radial dans le sens de la flèche F₁ pour déverrouiller les mâchoires 21 à 24, ou dans le sens de la flèche F₂ pour verrouiller les mâchoires 21 à 24.

Afin de provoquer la rotation de la plaque intermédiaire 36 par l'utilisateur, le dispositif de verrouillage / déverrouillage 10 comprend en outre une poignée centrale 55 qui est solidaire de la plaque intermédiaire 36 et qui fait saillie au centre du couvercle 1.

Cette poignée centrale 55 est solidaire en rotation de la plaque 36 par exemple au moyen d'un ergot (non représenté) de section transversale polygonale qui pénètre dans un logement 56 de section complémentaire. Par ailleurs, la forme de la poignée 55 peut être de toute nature pour faciliter sa manipulation par l'utilisateur.

En variante, les bras entraîneurs 27 à 30 peuvent être venus de matière avec les mâchoires 21 à 24.

Le fonctionnement du dispositif de verrouillage / déverrouillage 10 selon la présente invention va maintenant être décrit en regard des figures 1 à 3.

La mise en place du couvercle 1 sur la cuve 2 nécessite l'ouverture des mâchoires 21 à 24. Pour cela, l'utilisateur tourne la poignée centrale 55 dans le sens de rotation R₁ (fig. 2) de manière à provoquer un déplacement radial externe des bras entraîneurs 27 à 30. La fin de la translation des bras et donc de l'ouverture des mâchoires 21 à 24 est déterminée par la venue en butée des doigts 42 dans le fond de leurs chemins de guidage 45. La soupape de verrouillage 12 n'étant pas soumise à une pression, elle occupe sa position basse, de sorte qu'elle ne pénètre pas dans la lumière 37 ménagée dans l'un des bras radiaux 27 à 30, par exemple dans le bras radial 29. Le mouvement de ces bras n'est donc pas limité.

Après avoir mis en position le couvercle 1 sur la cuve 2, les mâchoires 21 à 24 doivent être verrouillées. Pour cela, l'utilisateur actionne la poignée centrale 55 dans le sens de rotation R₂ (fig. 3) de manière à provoquer la rotation de la plaque intermédiaire 36, et donc un déplacement radial interne des bras 27 à 30.

Grâce à la soupape de verrouillage 12, la mise en pression du récipient 3 ne peut avoir lieu que si les mâchoires 21 à 24 sont correctement verrouillées.

En effet, la lumière 37 est ménagée sur l'un des bras radiaux en un emplacement adapté pour que la lumière 37 et la soupape 12 soient en regard lorsque les bras 27 à 30 sont dans une position permettant un bon verrouillage des mâchoires 21 à 24, assurant un maintien en position en toute sécurité du couvercle 1 sur la cuve 2.

Par conséquent, à partir de l'instant où la pression à l'intérieur du récipient dépasse un certain seuil, en fait dès que la cuve est en surpression par rapport à l'extérieur du récipient, la soupape de verrouillage 12 est en position de butée haute. Le mouvement des bras 21 à 24 est alors bloqué, interdisant tout déverrouillage des mâchoires 21 à 24.

De plus, dans le cas où les mâchoires 21 à 24 auraient été mal verrouillées, les bras radiaux 27 à 30 n'ont pas effectué un déplacement radial interne suffisant pour amener la lumière 37 en correspondance avec la soupape de verrouillage 12. Cette soupape ne peut donc pas venir en butée haute et permet ainsi une fuite de la vapeur hors du récipient 3. La montée en pression à l'intérieur du récipient 3 ne peut donc pas avoir lieu, assurant donc la sécurité de l'utilisateur.

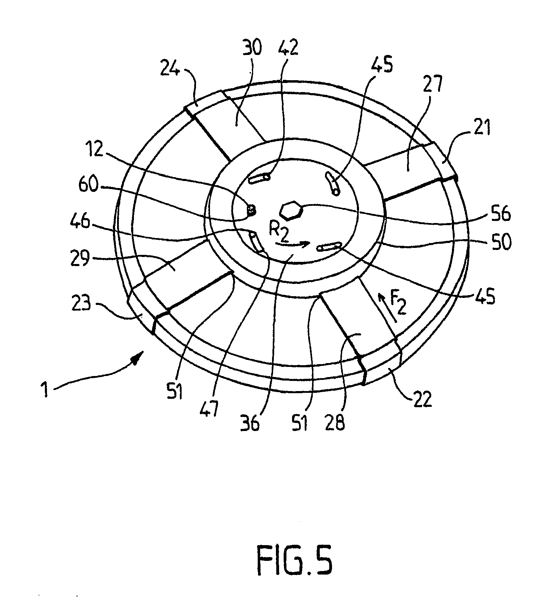

Dans le deuxième mode de réalisation représenté aux figures 4 et 5, le dispositif de verrouillage / déverrouillage 10 comprend les mêmes parties constitutives que dans le premier mode de réalisation. Les éléments identiques ou similaires porteront donc les mêmes références numériques.

Selon une caractéristique essentielle de l'invention, la soupape de verrouillage 12 n'est plus implantée en vis à vis de l'un des bras radiaux, mais en vis à vis de la plaque intermédiaire 36. La plaque intermédiaire 36 possède donc maintenant une lumière 60 qui est destinée à venir en regard de la soupape de verrouillage 12 lorsque cette plaque occupe la position correspondant au bon verrouillage des mâchoires 21 à 24.

Lorsque le récipient 3 est mis en pression, la soupape de verrouillage 12 atteint sa position de butée haute et pénètre dans la lumière 60. Cette soupape empêche ainsi tout mouvement de la plaque intermédiaire 36. Le mouvement de l'ensemble des bras est donc bloqué simultanément.

Cette forme de réalisation de l'invention est particulièrement avantageuse, puisqu'elle permet une action de la soupape de verrouillage 12 directement sur la plaque de commande, réduisant ainsi les jeux entre les pièces constitutives du dispositif 10 et favorisant l'équilibrage mécanique de l'ensemble. L'invention permet ainsi une utilisation en toute sécurité du récipient 3, tout en ayant un mouvement identique des quatre mâchoires.

Dans encore une autre variante non représentée aux figures, au moins deux des bras entraîneurs alignés l'un avec l'autre se chevauchent au niveau de leurs extrémités internes 41 et possèdent chacun une ouverture. L'emplacement de ces ouvertures et l'implantation de la soupape de verrouillage 12 au niveau de la plaque intermédiaire 36 sont adaptés pour qu'en position de verrouillage des mâchoires 21 à 24, les ouvertures soient en regard l'une avec l'autre et avec la soupape.

Ainsi, lorsque les mâchoires sont dans leur position de verrouillage correcte, la soupape peut venir en butée haute. Dans cette position, la soupape traverse les ouvertures des au moins deux bras ainsi que la lumière de la plaque intermédiaire. Les deux bras sont alors immobilisés l'un par rapport à l'autre, et la plaque intermédiaire est immobilisée en rotation, ce qui bloque tout mouvement des deux autres bras. Les quatre mâchoires 21 à 24 sont ainsi bloquées de façon sûre dans leur position de verrouillage.

Dans cette variante, la soupape de verrouillage est implantée en un lieu situé dans l'axe des deux bras alignés.

II est encore possible, dans une autre variante, de faire chevaucher les quatre extrémités internes 41 des bras entraîneurs. La soupape de verrouillage 12 est alors située au centre du couvercle 1 pour pouvoir, en position de butée haute, traverser simultanément des lumières ménagées dans les quatre bras ainsi que la lumière de la plaque intermédiaire (qui sont amenées en regard). Les quatre mâchoires sont ainsi simultanément bloquées.

Bien entendu, on comprend que le dispositif de verrouillage / déverrouillage selon la présente invention peut être appliqué à tout type de récipient de cuisson sous pression comportant une cuve destinée à être fermée par un couvercle.

### POSSIBILITE D'APPLICATION INDUSTRIELLE

L'invention trouve son application industrielle dans la fabrication d'appareils électroménagers de cuisson, en particulier d'autocuiseurs.

## Revendications

1. Dispositif de verrouillage / déverrouillage d'un couvercle (1) sur une cuve (2) pour former un récipient de cuisson (3) sous pression comprenant :
- au moins deux mâchoires (15, 21 à 24) montées mobiles radialement sur le couvercle (1) entre une position de verrouillage du couvercle (1) sur la cuve (2) et une position de déverrouillage dans laquelle le couvercle (1) peut être retiré de la cuve (2),
- des moyens de commande (20) du mouvement des mâchoires (15) provoquant leur déplacement radial et déplaçant les mâchoires (15) dans l'une ou l'autre de leurs positions de verrouillage et de déverrouillage, lesdits moyens de commande (20) comprenant un organe de commande (35) apte à être déplacé pour déplacer les mâchoires (21 à 24),
- au moins une soupape de verrouillage (12) montée sur le couvercle (1) et apte à occuper sous l'effet de la pression régnant dans le récipient (3), une position haute et une position basse, de manière à bloquer sélectivement le mouvement des mâchoires (15),
**caractérisé en ce que**
- les mâchoires sont montées mobiles radialement par des bras entraîneurs (16, 27-30) se présentant sous la forme d'un profilé métallique rectiligne avec une extrémité externe (40) reliée à l'une des mâchoires (21-24) et une extrémité interne (41),
- les moyens de commande (20) comprennent une plaque intermédiaire (36) entraînée en rotation par l'organe de commande (35), ladite plaque intermédiaire (36) et les bras entraîneurs (16, 27-30) coopérant ensemble par l'extrémité interne (41) pour que la rotation de la plaque (36) provoque un déplacement radial rectiligne des bras entraîneurs.
- chacune des extrémités internes (41) des bras (27 à 30) est munie d'un doigt (42) et la plaque intermédiaire (36) comporte des chemins de guidage (45) de forme oblongue et dirigés vers le centre de rotation de la plaque (36), les doigts (42) étant destinés à se déplacer dans les chemins (45) lors de la rotation de la plaque (36).

2. Dispositif selon la revendication 1, **caractérisé en ce** l'organe de commande (35) est monté mobile en rotation par rapport au couvercle (1).

3. Dispositif selon la revendication 1 ou 2, **caractérisé en ce qu'**une lumière (37) est ménagée dans au moins l'un des bras radiaux (27 à 30), la soupape de verrouillage (12) et la lumière (37) étant agencées relativement pour qu'en position de verrouillage des quatre mâchoires (21 à 24), la lumière (37) soit traversée par la soupape (12) en position haute pour bloquer les mâchoires (21 à 24) en position de verrouillage.

4. Dispositif selon la revendication 1 ou 2, **caractérisé en ce qu'**une lumière (60) est ménagée dans la plaque intermédiaire (36), la soupape de verrouillage (12) et la lumière (60) étant agencées relativement pour qu'en position de verrouillage des mâchoires (21 à 24), la lumière (60) soit traversée par la soupape (14) en position haute pour bloquer la rotation de la plaque (36) et bloquer simultanément les mâchoires (21 à 24) en position de verrouillage.

5. Dispositif selon la revendication 3 ou 4, **caractérisé en ce que** l'organe de commande (35) assure le déplacement des bras entraîneurs (27 à 30) de manière active dans le sens radial externe (F1) et le sens radial interne (F2).

6. Dispositif selon l'une quelconque des revendications 1 à 5, **caractérisé en ce que** les bras entraîneurs (27 à 30) sont guidés en translation sensiblement rectiligne.

7. Dispositif selon l'une quelconque des revendications 3 à 6, **caractérisé en ce qu'**au moins deux des bras entraîneurs (28, 30) mutuellement alignés se chevauchent et possèdent chacun une ouverture, et **en ce que** les ouvertures et la soupape de verrouillage (12) sont implantées en un lieu adapté pour qu'en position de verrouillage des mâchoires (21 à 24), la soupape soit apte à traverser lesdits au moins deux bras et la plaque intermédiaire (36) pour bloquer les mâchoires.

8. Dispositif selon la revendication 7, **caractérisé en ce que** les quatre bras entraîneurs (27 à 30) se chevauchent et la soupape de verrouillage (12) est située au centre du couvercle (1) pour être apte à traverser, en position de verrouillage des mâchoires, les lumières des quatre bras et la plaque intermédiaire (36) et bloquer les simultanément les quatre mâchoires.

9. Dispositif selon l'une quelconque des revendications 1 à 8, **caractérisé en ce qu'**il comprend en outre une poignée centrale (55) permettant d'agir positivement sur la rotation de la plaque intermédiaire (36).

10. Dispositif selon l'une quelconque des revendications 1 à 9, **caractérisé en ce** chacune des mâchoires (21 à 24) est venue de matière avec l'un des bras entraîneurs (27 à 30).

11. Récipient de cuisson sous pression (3), comportant une cuve (2), un couvercle (1) et un dispositif de verrouillage / déverrouillage (10) du couvercle (1) sur la cuve (2) selon l'une quelconque des revendications précédentes.

## Claims

1. Device for locking/unlocking a lid (1) on a vessel (2) in order to form a pressurised cooking receptacle (3), comprising:
- at least two jaws (15, 21 to 24) mounted so as to be able to move radially on the lid (1) between a position of locking the lid (1) on the vessel (2) and an unlocking position in which the lid (1) can be removed from the vessel (2),
- means (20) of controlling the movement of the jaws (15) causing the radial movement thereof and moving the jaws (15) from one or other of the locking and unlocking positions thereof, the said control means (20) comprising a control member (35) able to be moved in order to move the jaws (21 to 24),
- at least one locking valve (12) mounted on the lid (1) and able to occupy, under the effect of the pressure prevailing in the receptacle (3), a high position and a low position, so as to selectively lock the movement of the jaws (15),
**characterised in that**
- the jaws are mounted so to be able to move radially through driving arms (16, 27-30) in the form of a rectilinear metal profile with an external end (40) connected to one of the jaws (21-24) and an internal end (41),
- the control means (20) comprise an intermediate plate (36) driven in rotation by the control member (35), the said intermediate plate (36) and the driving arms (16, 27-30) cooperating together through the internal end (41) so that the rotation of the plate (36) causes a rectilinear radial movement of the driving arms,
- each of the internal ends (41) of the arms (27 to 30) is provided with a finger (42) and the intermediate plate (36) comprises oblong-shaped guide tracks (45) directed towards the centre of rotation of the plate (36), the fingers (42) being intended to move in the tracks (45) when the plate (36) is rotated.

2. Device according to claim 1, **characterised in that** the control member (35) is mounted so as to be able to move in rotation with respect to the lid (1).

3. Device according to claim 1 or 2, **characterised in that** an aperture (37) is provided in at least one of the radial arms (27 to 30), the locking valve (12) and the aperture (37) being arranged relatively so that, in the locking position of the four jaws (21 to 24), the aperture (37) has the valve (12) passing through it in the high position in order to lock the jaws (21 to 24) in the locking position.

4. Device according to claim 1 or 2, **characterised in that** an aperture (60) is provided in the intermediate plate (36), the locking valve (12) and the aperture (60) being arranged relatively so that, in the locking position of the jaws (21 to 24), the aperture (60) has the valve (14) passing through it in the high position in order to lock the rotation of the plate (36) and simultaneously lock the jaws (21 to 24) in the locking position.

5. Device according to claim 3 or 4, **characterised in that** the control member (35) ensures the movement of the driving arms (27 to 30) in an active manner in the external radial direction (F1) and the internal radial direction (F2).

6. Device according to any one of claims 1 to 5, **characterised in that** the driving arms (27 to 30) are guided in substantially rectilinear translation.

7. Device according to any one of claims 3 to 6, **characterised in that** at least two of the mutually aligned driving arms (28, 30) overlap and each have an opening, and **in that** the openings and the locking valve (12) are located in a suitable place so that, in the locking position of the jaws (21 to 24), the valve is able to pass through the said at least two arms and the intermediate plate (36) in order to lock the jaws.

8. Device according to claim 7, **characterised in that** the four driving arms (27 to 30) overlap and the locking valve (12) is situated at the centre of the lid (1) in order, in the locking position of the jaws, to be able to pass through the apertures in the four arms and the intermediate plate (36) and simultaneously lock the four jaws.

9. Device according to any one of claims 1 to 8, **characterised in that** it also comprises a central handle (55) for acting positively on the rotation of the intermediate plate (36).

10. Device according to any one of claims 1 to 9, **characterised in that** each of the jaws (21 to 24) is made in one piece with one of the driving arms (27 to 30).

11. Pressurised cooking receptacle (3), comprising a vessel (2), a lid (1) and a device (10) for locking/unlocking the lid (1) on the vessel (2) according to any one of the preceding claims.

## Patentansprüche

1. Ver- und Entriegelungvorrichtung eines Deckels (1) auf einem Behälter (2) zur Ausbildung eines Druckgargeräts (3) mit:
- mindestens zwei Klemmbacken (15, 21-24), die auf dem Deckel (1) radial beweglich sind zwischen einer Verriegelungsposition des Deckels (1) auf dem Behälter (2) und einer Entriegelungsposition, in welcher der Deckel (1) von dem Behälter (2) abgenommen werden kann,
- Betätigungsmittel (20) zur Bewegung der Klemmbacken (15), die deren radiale Verschiebung bewirken und die Klemmbacken (15) entweder in ihre Verriegelungsposition oder in ihre Entriegelungsposition verschieben, wobei die Betätigungsmittel (20) ein Betätigungselement (35) umfassen, das verschoben werden kann, um die Klemmbacken (21-24) zu verschieben,
- mindestens ein Verriegelungsventil (12), das auf dem Deckel (1) angebracht ist und unter der Wirkung des in dem Gerät (3) herrschenden Drucks eine obere Position und eine untere Position einnehmen kann, sodass es selektiv die Bewegung der Klemmbacken (15) blockiert,
**dadurch gekennzeichnet, dass**
- die Klemmbacken mithilfe von Antriebsarmen (16, 27-30) radial beweglich angebracht sind, welche die Form eines geradlinigen Metallprofils mit einem äußeren, mit jeweils einer der Klemmbacken (21-24) verbundenen Ende (40) und einem inneren Ende (41) aufweisen,
- die Betätigungsmittel (20) eine Zwischenplatte (36) umfassen, die durch das Betätigungsclement (35) in Drehung versetzt wird, wobei die Zwischenplatte (36) und die Antriebsarme (16, 27-30) durch das innere Ende (41) so zusammenwirken, dass die Drehung der Platte (36) eine geradlinige, radiale Verschiebung der Antriebsarme bewirkt,
- jedes der inneren Enden (41) der Arme (27-30) mit einem Stift (42) versehen ist und die Zwischenplatte (36) längliche Führungsbahnen (45) aufweist, die zum Drehzentrum der Platte (36) ausgerichtet sind, wobei die Stifte (42) dazu bestimmt sind, sich bei der Drehung der Platte (36) in den Bahnen (45) zu verschieben.

2. Vorrichtung nach Anspruch 1, **dadurch gekennzeichnet, dass** das Betätigungselement (35) drehbeweglich zum Deckel (1) angebracht ist.

3. Vorrichtung nach Anspruch 1 oder 2, **dadurch gekennzeichnet, dass** in mindestens einem der radialen Arme (27-30) ein Langloch (37) ausgebildet ist, wobei das Verriegelungsventil (12) und das radiale Langloch (37) so zueinander angeordnet sind, dass in der Verriegelungsposition der vier Klemmbacken (21-24) das Langloch (37) von dem Ventil (12) in der oberen Position durchquert wird, um die Klemmbacken (21-24) in der Verriegelungsposition zu blockieren.

4. Vorrichtung nach Anspruch 1 oder 2, **dadurch gekennzeichnet, dass** in der Zwischenplatte (36) ein Langloch (60) ausgebildet ist, wobei das Verriegelungsventil (12) und das Langloch (60) so zueinander angeordnet sind, dass in der Verriegelungsposition der Klemmbacken (21-24) das Langloch (60) von dem Ventil (14) in der oberen Position durchquert wird, um die Drehung der Platte (36) und gleichzeitig die Klemmbacken (21-24) in der Verriegelungsposition zu blockieren.

5. Vorrichtung nach Anspruch 3 oder 4, **dadurch gekennzeichnet, dass** das Betätigungselement (35) aktiv für die Verschiebung der Antriebsarme (27-30) in radialer Richtung nach außen (F1) und in radialer Richtung nach innen (F2) sorgt.

6. Vorrichtung nach einem der Ansprüche 1 bis 5, **dadurch gekennzeichnet, dass** die Antriebsarme (27-30) in im Wesentlichen geradliniger Translation geführt sind.

7. Vorrichtung nach einem der Ansprüche 3 bis 6, **dadurch gekennzeichnet, dass** mindestens zwei der gegenseitig ausgerichteten Antriebsarme (28, 30) sich überlappen und jeweils eine Öffnung besitzen, und dass die Öffnungen und das Verriegelungsventil (12) so angebracht sind, dass in der Verriegelungsposition der Klemmbacken (21-24) das Ventil in der Lage ist, die mindestens zwei Arme und die Zwischenplatte (36) zu durchqueren, um die Klemmbacken zu blockieren.

8. Vorrichtung nach Anspruch 7, **dadurch gekennzeichnet, dass** die vier Antriebsarme (27-30) sich überlappen und das Verriegelungsventil (12) in der Mitte des Deckels (1) liegt, um in der Verriegelungsposition der Klemmbacken die Langlöcher der vier Arme und die Zwischenplatte (36) durchqueren zu können und gleichzeitig die vier Klemmbacken zu blockieren.

9. Vorrichtung nach einem der Ansprüche 1 bis 8, **dadurch gekennzeichnet, dass** sie außerdem einen zentralen Griff(55) umfasst, der es erlaubt, positiv auf die Drehung der Zwischenplatte (36) einzuwirken.

10. Vorrichtung nach einem der Ansprüche 1 bis 9, **dadurch gekennzeichnet, dass** jede der Klemmbacken (21-24) einstückig mit einem der Antriebsarme (27-30) ausgebildet ist.

11. Druckgargerät (3) mit einem Behälter (2), einem Deckel (1) und einer Vorrichtung zur Ver- und Entriegelung (10) des Deckels (1) auf dem Behälter (2) nach einem der voranstehenden Ansprüche.
